# EUROPÄISCHE PATENTSCHRIFT

(11) **EP 1 177 121 B1**
(45) Veröffentlichungstag und Bekanntmachung des Hinweises auf die Patenterteilung: **02.07.2003**
(21) Anmeldenummer: 00927077.8
(22) Anmeldetag: 27.04.2000
(51) Int. Cl.: B60T 8/34

(54) **VERFAHREN ZUR DRUCKMODULATION VON BREMSDRÜCKEN**
METHOD FOR MODULATING BRAKE PRESSURES
PROCEDE DE MODULATION DE PRESSIONS DE FREINAGE

(30) Priorität: 30.04.1999 DE 19919841
(43) Veröffentlichungstag der Anmeldung: 06.02.2002
(73) Patentinhaber: Continental Teves AG & Co. oHG, 60488 Frankfurt (DE)
(72) Erfinder: LATARNIK, Michael DI, - (DE); FÜHRER, Jochen, D-64287 Darmstadt (DE); BENDER, Markus, D-60388 Frankfurt am Main (DE); SCHELLER, Tobias, D-65931 Frankfurt am Main (DE)
(86) Internationale Anmeldenummer: EP0003785
(87) Internationale Veröffentlichungsnummer: WO00066407

(56) Entgegenhaltungen:
- DE-A- 4 427 247
- DE-A- 19 635 604

## Beschreibung

Die Erfindung bezieht sich auf ein Verfahren zur Druckmodulation von Bremsdrücken nach dem oberbegriff des Anspruchs 1.

Moderne Fahrzeugbremsanlagen weisen neben einer primären Druckmittelquelle für Hydraulikfluid (beispielsweise dem Bremszylinder/Tandem-Hauptzylinder) eine oder mehrere Druckmittelpumpen auf, mit denen für bestimmte Zwecke auch bzw. zusätzlich unter Druck stehendes hydraulisches Fluid gefördert werden kann. Beispielsweise handelt es sich hierbei um Druckmittelpumpen, die am Ventilblock angeordnet sind und die über die elektrische Ansteuerung eines Elektromotors und einen Exzenter betätigt werden. Zweck dieser Druckmittelpumpen ist der aktive Druckaufbau für bestimmte Steuerungs- bzw. Regelungszwecke, wenn der von der Hauptdruckquelle stammende Bremsdruck nicht ausreicht, um das Regelungsziel zu erreichen. Als Beispiel kann die Antriebsschlupfregelung genannt werden. In der Regel wird dann, wenn Antriebsschlupf vorliegt, seitens des Fahrers überhaupt nicht gebremst, so daß die primäre Druckquelle keinen Druck liefert. Gleichwohl kann zur Regelung des Antriebsschlupfs ein aktives Einsteuern, Halten oder Abbauen eines Bremsdruckes insbesondere an den Bremsen der angetriebenen Räder wünschenswert sein, so daß eine Einrichtung zur Druckmodulation, die einen Druckaufbau umfaßt, vorzusehen ist. Diese Einrichtung kann die eingangs genannte Druckmittelpumpe aufweisen.

Bisher wird bei einem Verfahren zur Druckmodulation von Bremsdrücken für eine Zweikreis-Bremsanlage beispielsweise mit Vorderachs-/Hinterachs-Aufteilung an einachsgetriebenen Fahrzeugen oder beliebiger Bremskraftaufteilung bei Allradfahrzeugen also bei allen zweikreisigen Bremsdruckübertragungseinrichtungen bei denen in beiden Rädern eine aktive Druckmodulation mit unterschiedlicher Bremsdruckanforderung in beiden Radbremskreisen vorgesehen ist, diese Bremsdruckmodulation durch separates Ansteuern von Ein- und Auslaßventilen des jeweiligen Radbremskreises zur Regelung des Antriebsschlupfes durchgeführt. Dabei wird die Druckmittelquelle von dem druckseitigen Förderkreis der Druckmittelpumpe getrennt, damit das hydraulische Fluid nicht in die Druckmittelquelle zurückströmen kann. Die Absperrung erfolgt mittels eines Trennventils.

Die Fördermenge und damit mittelbar der Bremsdruck wird auf diese weise in jedem der beiden Radbremskreise einer Bremsdruckübertragungseinrichtung eingestellt. Dies hat jedoch den Nachteil, daß die Ventile gegen den Druck der Druckmittelpumpe arbeiten. Dadurch werden Geräusche erzeugt, die wie der ABS-Eingriff für den Fahrer hörbar werden und die den Eindruck hinterlassen, daß eine alarmierende Fahrsituation vorliegt, obwohl dies nicht unbedingt der Fall sein muß (beispielsweise bei Antriebsschlupfregelung oder bei einer regulären Bremsung).

Die bekannte Druckmodulation über die separate Ansteuerung von Ein- und Auslaßventilen sieht außerdem einen Abbau des Bremsdruckes aus beiden Radbremskreisen über die Auslaßventile vor. Dabei strömt das Druckmittel durch die Druckmittelpumpe und das dem Trennventil zugeordnete Druckbegrenzungsventil, welches das Druckniveau des Bremsdruckübertragungskreises vorgibt, in die Druckmittelquelle zurück. Besonders bei Fahrstabilitäts-Regelungen und bei heckgetriebenen Fahrzeugen mit hohem Druckniveau des Bremsdruckübertragungskreises wird die Druckmittelpumpe dabei in erheblichem Maß belastet, da sie gegen einen hohen Druck arbeitet.Darüber hinaus werden beim Überströmen des Druckbegrenzungsventils sowie beim Fördern durch die Druckmittelpumpe Geräuschemissionen erzeugt, die für den Fahrer ebenfalls hörbar sind.

Eine derartige Bremsanlage ist in der DE 44 27 247 Al beschrieben. Mit ihr kann sowohl eine geregelte Pedalkraftbremsung als auch eine geregelte Fremdkraftbremsung durchgeführt werden. Eine Pedalkraftbremsung ist eine Bremsung, bei der durch eine vom Fahrer gewollte Betätigung des Bremszylinders ein von der Bremsdruckübertragungseinrichtung vorgegebener Bremsdruck in den Radbremskreisen aufgebaut wird, während bei einer Fremdkraftbremsung, unabhängig von einer Pedalbetätigung, der Bremsdruck in den Radbremskreisen aufgebaut wird, der nach bestimmten Regelalgorithmen moduliert werden kann, so z.B. bei einer Antriebsschlupfregelung oder einer Fahrstabilitätsregelung. Bei einer Antriebsschlupfregelung wird der Bremsdruck in den Bremsen der angetriebenen Räder so eingestellt, daß das um das Bremsmoment reduzierte Motormoment von den Reifen auf die Fahrbahn übertragen werden kann, ohne daß die Räder durchdrehen.

Die bekannte Bremsdruckübertragungseinrichtung besteht aus den Ein- und Auslaßventilen, dem Schaltventil, dem Trennventil, den Niederdruckspeichern und einer Rückförderpumpe. Durch Schalten der Ein- und Auslaßventile wird der Druck während der Fremdkraftbremsung in den angeschlossenen Radbremsen eingesteuert, gehalten und gesenkt. Der Druck wird bei geöffneten Einlaß- und Schaltventilen und geschlossenen Trenn- und Auslaßventilen in beiden Radbremskreisen aufgebaut. Ist der Druck der Bremsdruckanforderung erreicht, werden die beiden Einlaßventile bei noch aktiver Rückförderpumpe geschlossen. Mittels der Rückförderpumpe wird ein ausreichend hoher Drück eingangsseitig vor den Einlaßventilen aufgebaut, der ein Abströmen des Druckmittels über die das Einlaßventil überbrückenden Rückschlagventile verhindert. Danach wird das Schaltventil geschlossen. Gehalten wird der Druck bei geschlossenen Ventilen, so daß über Schaltventil, Trennventil sowie Ein- und Auslaßventile kein hydraulisches Druckmittel in den Radbremskreisen strömen kann. Zum Druckabsenken werden nach einer Ausführungsvariante die Auslaßventile geöffnet, so daß das in den Radbremsen vorhandene, unter Druck stehende Druckmittel in die Niederdruckspeicher abfließt, von wo es mittels der Rückförderpumpe zum Bremszylinder gefördert wird. Die Aufgabe des Niederdruckspeichers besteht dabei im wesentlichen darin, das bei einem raschen Druckabbau aus den Radbremskreisen abgelassene Druckmittel zwischenzuspeichern, da die Rückförderpumpe wegen ihrer begrenzten Förderkapazität nur eine bestimmte Druckmittelmenge pro Zeiteinheit zu fördern vermag. Nach einer weiteren Ausführungsvariante wird das Einlaßventil und das Trennventil eines Radbremskreises geöffnet, so daß das Druckmittel des betreffenden Radbremskreises über das geöffnete Einlaßventil direkt zum Bremszylinder und durch diesen hindurch zur Druckmittelquelle abströmt.

Der Erfindung liegt die Aufgabe zugrunde, ein Verfahren zur Druckmodulation von Bremsdrücken zu schaffen, das die Geräuschemissionen reduziert und die Möglichkeit der Einbremsung während der Fremdkraftbremsung erhöht.
Diese Aufgabe wird erfindungsgemäß durch die Merkmale des Anspruchs 1 gelöst.

Vorteilhafte Weiterbildungen der Erfindung sind in den Unteransprüchen angegeben.

Durch das Verfahren zur Druckmodulation von Bremsdrücken mit einer elektrischen Druckmittelpumpe in einer zweikreisigen Bremsdruckübertragungseinrichtung, mit den Schritten Einsteuern eines Bremsdruckes in den einen und/oder anderen Radbremskreis des einen Bremsdruckübertragungkreises, Halten des Bremsdruckes in dem einen und/oder anderen Radbremskreis des einen Bremsdruckübertragungskreises und Abbauen des Bremsdruckes in den einen und/oder anderen Radbremskreis des einen Bremsdruckübertragungskreises, bei dem eine Aufteilung der Radbremskreise des einen Bremsdruckübertragungskreises in einen führenden und einen folgenden Radbremskreis mit unterschiedlicher Bremsdruckanforderung vorgesehen wird,
und bei dem der führende Radbremskreis als Radbremskreis mit einer höheren Bremsdruckanforderung festgelegt wird und bei dem ferner die Schritte Einsteuern, Halten und Abbauen der Bremsdrücke des folgenden Radbremskreises in Abhängigkeit von dem führenden Radbremskreis derart gestevert werden, daß beim Einstevern des Bremsdrucks in die beiden Radbremskreise die Bremsdruckanforderung im folgenden Radbremkreis vor der Bremsdruckenforderung im führenden Radbremskreis eingestellt wird, werden die Geräuschemissionen bei der Fremdkraftbremsung reduziert, da das Einlaßventil des führenden Radbremskreises auch nach der erreichten Bremsdruckanforderung des folgenden Radbremskreises geöffnet bleibt, so daß dieses Ventil nicht gegen den Druck der Druckmittelpumpe arbeiten muß. Das geschlossene Einlaßventil des folgenden Radbremskreises arbeitet zwar gegen den Druck der Druckmittelpumpe, dieser Druck im folgenden Radbremskreis ist jedoch auf den Differenzdruck zwischen dem führenden und folgenden Radbremskreis beschränkt, so daß die Geräuschemissionen beim Öffnen dieses Einlaßventils ebenfalls reduziert sind. Durch das offene Einlaßventil ist eine Pedalkraftbremsung auch während der Druckmodulation möglich.

Nach einer Ausbildung der Erfindung, wird der Radbremskreis des führenden Rades über das Öffnen eines Schaltventils mit einer Druckmittelquelle (Vorratsbehälter, Bremszylinder)verbunden und das Druckmittel über die im Radbremskreis angeordnete Druckmittelkpumpe in den führenden und folgenden Radbremskreis bei von der Druckmittelquelle mit einem Trennventil getrennten Bremsdruckkreis eingesteuert. Durch dieses Vorgehen wird bei stromlos offenen Einlaßventilen der Druck in beiden Radbremskreisen entsprechend einer Bremsdruckanforderung der Radbremskreise aufgebaut.

Nach einer weiteren Ausbildung der Erfindung, wird der Radbremskreis des führenden Rades bei einem geschlossenen Schaltventil mit einem Druckmittelspeicher verbunden und das Druckmittel über die im Radbremskreis angeordnete Druckmittelpumpe in den führenden und folgenden Radbremskreis bei von einer Druckmittelquelle mit einem Trennventil getrennten Bremsdruckkreis beigesteuert. Abhängig von dem Ladezustand des Druckspeichers (Niederdruckspeichers) kann das für den Druckaufbau benötigte Druckmittel für die beiden Radbremskreise diesem Druckmittelspeicher und/oder der Druckmittelquelle entnommen werden.

Gemäß der Erfindung ist in jedem Radbremskreis ein Ein- und Auslaßventil vorgesehen, wobei die Bremsdruckanforderung des führenden und folgenden Radbremskreises über das Einlaßventil des folgenden Radbremskreises und das von der Druckmittelpumpe nach Maßgabe der Bremsdruckanforderung geförderten Druckmittels bei geöffnetem Einlaßventil des führenden Radbremskreises und geschlossenen Auslaßventilen des führenden und folgenden Radbremskreises gesteuert wird. Durch die Aufteilung in einen führenden Radbremskreis mit höherer Druckanforderung und einen folgenden Radbremskreis mit geringerer Druckanforderung kann die Bremsdruckanforderung des folgenden Radbremskreises immer aus dem führenden Radbremskreis aufgebaut werden. Dabei fördert die Druckmittelpumpe zur Bremsdruckeinstellung nur die für die Bremsdruckanforderung des führenden Radbremskreises erforderliche Fördermenge, wobei das stromlos offene Einlaßventil des führenden Radbremskreises nicht angesteuert werden muß.

Muß der Druck des folgenden Radbremskreises korrigiert werden, weil sich bei der Antriebsschlupfregelung beispielsweise der Reibwert des Untergrundes ändert, wird die Bremsdruckanforderung des folgenden Radbremskreises aus dem führenden Radbremskreis durch Öffnen des Einlaßventils des folgenden Radbremskreises bei aktiver oder passiver Druckmittelpumpe eingegtellt. Sind dabei nur geringe Druckänderungen im folgenden Radbremskreis vorzunehmen, kann bei ausreichender Druckdifferenz zwischen führenden und folgenden Radbremskreis die Veränderung des Drucks im folgenden Radbremskreis ausschließlich aus dem führenden Radbremskreis erfolgen, ohne daß der Druck im führenden Radbremskreis hin zur Bremsdruckanforderung korrigiert werden muß. Vorteilhaft wird der Bremsdruck der Radbremskreise bei geschlossenem Schaltventil, Trennventil und Auslaßventil und geöffnetem Einlaßventil des führenden Radbremskreises und geschlossenem Aus- und Einlaßventil des folgenden Radbremskreises gehalten. Durch das offene Einlaßventil des führenden Radbremskreises ist eine Pedalkraftbremsung bei diesem Modus der Fremdkraftbremsung möglich.

Nach einer weiteren Variante (Sonderfall) wird das Einlaßventil des führenden Radbremskreises in Abhängigkeit von dem Bremsdruck im Radbremskreis oder in Abhängigkeit von einer mit einer Zustandsgröße korrelierenden zeitkonstanten geschlossen. Das Einlaßventil wird dabei nach einer vorgegebenen Zeit nach dem Schließen des Schaltventils geschlossen. Das im Druckmittelspeicher vorhandene Volumen wird dann über ein das Trennventil überbrückendes Druckbegrenzungsventil zurück in den Bremszylinder und den Vorratsbehälter gefördert. Diese Variante wird beispielsweise nur verwendet, wenn Volumen im Druckmittelspeicher infolge Druckabbau am folgenden Radbremskreis vorhanden ist und in Fahrsituationen, wie zum Beispiel bei einer Antriebsschlupfregelung auf homogenem Reibwert, in denen ein Überschwingen des Drucks über den Wert der Bremsdruckanforderung erhebliche negative Auswirkungen auf das Radverhalten ausübt.

Nach einer weiteren Ausbildung der Erfindung, wird bei gegenüber der Bremsdruckanforderung erhöhtem eingesteuertem Bremsdruck der Bremsdruck nach einer ersten Variante bei geschlossenem Schalt- und Auslaßventil und geöffnetem Einlaßventil durch Öffnen des Trennventils im führenden Radbremskreis über den Bremsdruckkreis in die Druckmittelquelle abgebaut. Nach einer zweiten Variante wird der Bremsdruck bei in Abhängigkeit von den Schritten Einsteuern oder Halten oder Abbauen der Bremsdrücke geschlossenem oder offenem Schalt- und/oder Trennventil im führenden Radbremskreis im folgenden Radbremskreis bei geschlossenem Einlaßventil durch Öffnen des Auslaßventils über eine Rücklaufleitung in den Druckmittelspeicher abgebaut.

Die auf berechneten Kenngrößen für die Schritte Einsteuern, Halten und Abbauen beruhenden Steuer- bzw. Regelsignale zum Ansteuern der Ventile nach dem erfindungsgemäßen Verfahren werden anhand eines Druckreglers, in dem ein Druckmodell abgelegt ist, vorgegeben, der mit den Steuer-bzw. Regeleinheiten für eine Antiblockierfunktion und/oder Antriebsschlupfregelung und/oder eine Fahrstabilitätsfunktion verbunden ist.

Zur Bremsdruckeinstellung in den führenden und folgenden Radbremskreis wird die Druckmittelpumpe mit vom Druckregler vorgegebenen graduellen Größen gesteuert, so daß sie graduell betrieben wird. Betriebszustände/ Fördermengen/ Drehzahlen der Druckmittelpumpe werden anhand der berechneten Bremsdruckanforderungen über die elektrische Ansteuerung, zum Beispiel über ein pulsweitenmoduliertes Signal, eingestellt, so daß die Druckmittelpumpe selbst ein Stellglied zur Einstellung des Bremsdrucks ist.

Dadurch daß die Druckmittelpumpe während der Schritte Halten und Abbauen über die Einstellung der Energiezufuhr und/oder der Drehzahl und/oder der Förderleistung in einem vorgegebenen Grund(last)zustand, vorzugsweise mit geringster Energiezufuhr, Drehzahl und/oder Förderleistung, betrieben wird, d.h. daß die Druckmittelpumpe so angesteuert wird, daß sie nicht stehen bleibt, wird eine Veränderung des Ausgangszustandes des Pumpenkolbens vermieden, wie er beim Abschalten der Druckmittelpumpe eintritt. Dabei wird sicher verhindert, daß ein von der Pumpenkolbenstellung abhängiges Fördervolumen bei jeder Aktivierung der Druckmittelpumpe zu einer undefinierten Bremsdruckeinstellung in den Radbremskreisen führt.

Selbstverständlich ist es auch möglich die Rückförderpumpe abzuschalten, wenn der Einfluß des durch die Pumpenkolbenstellung veränderten Fördervolumens beim Anfahren der Rückförderpumpe unberücksichtigt bleiben kann.

Ein Ausführungsbeispiel der Erfindung ist in der Zeichnung dargestellt und wird im folgenden näher beschrieben.

Es zeigen:
- Figur 1:: den hydraulischen Schaltplan einer Bremsanlage gemäß der Erfindung;
- Figur 2:: einen Schaltschema über die Ansteuerung der Ventile, mit den Schritten Einsteuern, Halten und Abbauen.

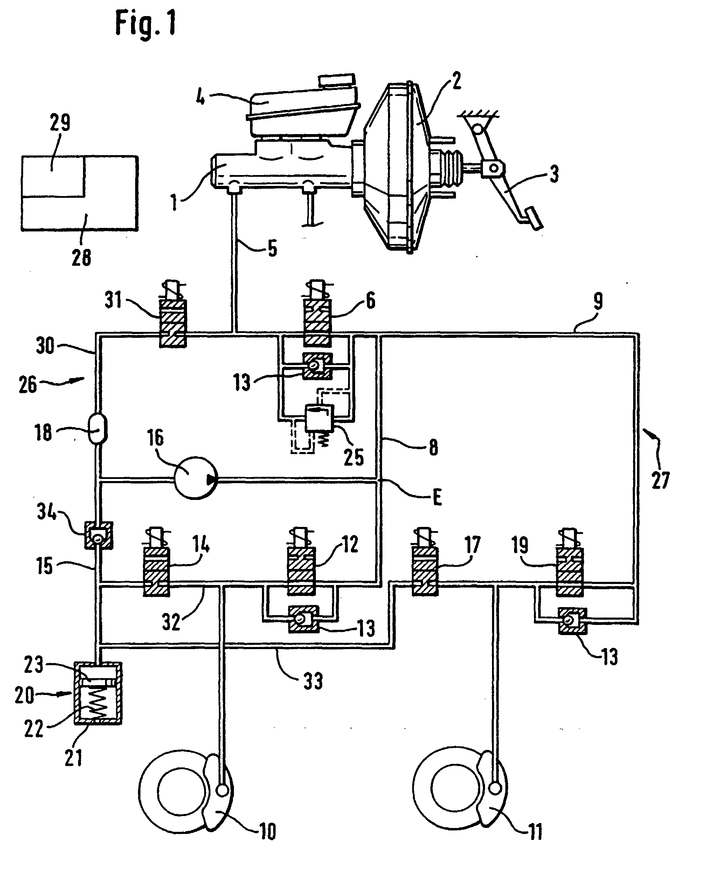

Die in der Figur 1 dargestellte zweikreisige Bremsdruckübertragungsvorrichtung für Fahrzeuge besteht aus einem Bremszylinder 1 mit einem Bremskraftverstärker 2, der durch ein Bremspedal 3 betätigt wird. An dem Bremszylinder 1 ist ein Vorratsbehälter 4 angeordnet, der ein Druckmittelvolumen enthält und in der Bremslösestellung an die Arbeitskammer des Bremszylinders 1 angeschlossen ist. Der dargestellte eine Bremsdruckübertragungskreis weist eine an eine Arbeitskammer des Bremszylinders 1 angeschlossene Bremsleitung 5 mit einem Trennventil 6 auf, das in seiner Ruhestellung einen offenen Durchgang für die Bremsleitung 5 bildet. Das Trennventil 6 wird üblicherweise elektromagnetisch betätigt. Es sind aber auch Variationen denkbar, bei der eine hydraulische Betätigung erfolgt.

Die Bremsleitung 5 verzweigt in zwei Bremsdruckleitungen 8, 9, die jeweils zu einer Radbremse 10, 11 führen. Die Bremsdruckleitungen 8, 9 enthalten jeweils ein elektromagnetisch betätigbares Einlaßventil 12, 19 das in seiner Ruhestellung offen ist und durch Erregung des Betätigungsmagneten in eine Sperrstellung geschaltet werden kann. Jedem Einlaßventil 12, 19 ist ein Rückschlagventil 13 parallel geschaltet, das in Richtung des Bremszylinders 1 öffnet. Parallel zu diesen Radbremskreisen 26, 27 ist ein sogenannter Rückförderkreis angeschlossen, der aus Rücklaufleitungen 15, 32, 33 mit einer Rückförderpumpe 16 besteht. Die Radbremsen 10, 11 schließen über jeweils ein Auslaßventil 14, 17 über Rücklaufleitungen 32, 33 an die Rücklaufleitung 15 an und damit an die Saugseite der Rückförderpumpe 16 , deren Druckseite mit der Bremsdruckleitung 8 in einem Einmündungspunkt E zwischen dem Trennventil 6 und den Einlaßventilen 12, 19 verbunden ist.

Die Rückförderpumpe 16 ist als Hubkolbenpumpe mit nicht näher dargestelltem Druckventil und einem Saugventil ausgebildet. An der Saugseite der Rückförderpumpe 16 befindet sich ein Niederdruckspeicher 20, bestehend aus einem Gehäuse 21 mit einer Feder 22 und einem Kolben 23.

In der Verbindung zwischen dem Niederdruckspeicher 20 und der Rückförderpumpe ist ein vorgespanntes, zu der Rückförderpumpe öffnendes Rückschlagventil 34 eingesetzt.

Die Saugseite der Rückförderpumpe 16 ist weiterhin über eine Zusatzleitung 30 mit einem Niederdruckdämpfer 18 und einem Schaltventil 31 mit dem Bremszylinder 1 verbunden. Außerdem weist der Bremskraftübertragungskreis einen Druckregler 28 mit einem Druckmodell 29 zur Berechnung der Bremsdruckanforderungen in den Radbremskreisen 26, 27 auf. In dem Druckregler oder in anderen elektronischen Regeleinheiten wird auf der Basis der errechneten Bremsdruckanforderungen in jedem der Radkreise 26, 27 eine Bewertung der Radbremskreise 26, 27 nach der Höhe der Bremsdruckanforderungen vorgenommen. Es erfolgt eine Aufteilung der Radbremskreise 26 oder 27 in einen führenden oder folgenden Radbremskreis dahingehend, daß der Radbremskreis z.B. 26 mit der höheren Bremsdruckanforderung als führender Radbremskreis und der mit der geringeren Bremsdruckanforderung als folgender Radbremskreis 27 bestimmt werden. In Abhängigkeit von den Schritten Einsteuern, Halten oder Abbauen der Bremsdrücke in den Radbremskreisen 26, 27 bei einer Antriebsschlupfregelung werden nach den Bremsdruckanforderungen in dem Druckregler 28 Steuer- bzw. Regelgrößen generiert, mittels denen die Ventile 12, 19, 6, 17, 31 und die Rückförderpumpe betätigt werden können. Dabei wird der folgende Radbremskreis 26 oder 27 über den führenden Radbremskreis 26 oder 27 gesteuert oder geregelt, d.h. hydraulisches Druckmittel wird beim Druckaufbau in den folgenden Radbremskreis mit der geringeren Bremsdruckanforderung in der Höhe der Bremsdruckanforderung aus oder über den führenden Radbremskreis eingesteuert.

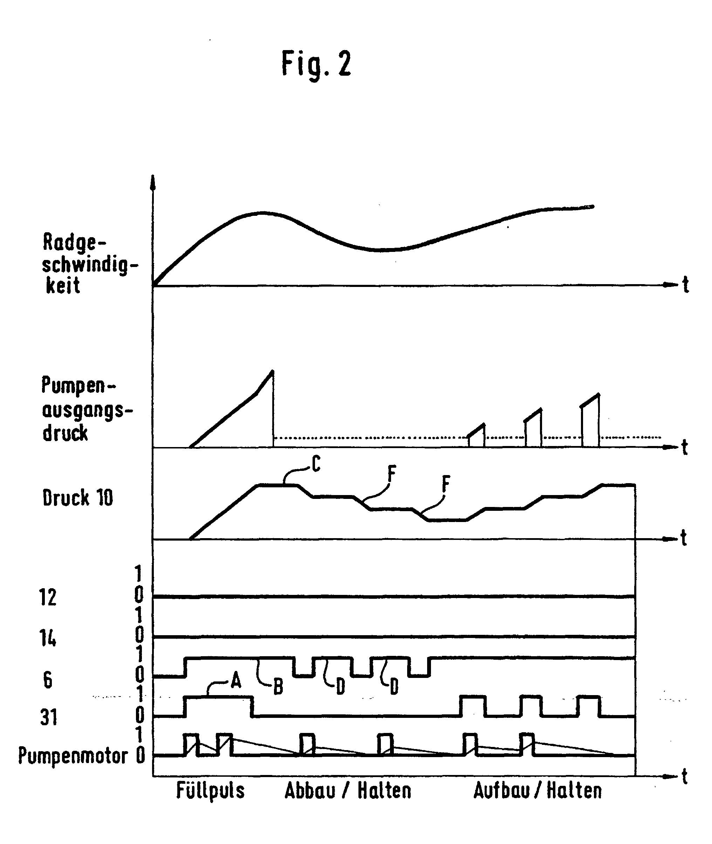

Wie Figur 2 zeigt, erfolgt der Druckaufbau in den Radbremskreisen 26, 27 bei geöffnetem Schaltventil 31 und geschlossenem Trennventil 6 über die Ansteuersignale A und B bei dem in Ausgangslage stromlos offenen Trennventil 6 und stromlos geschlossenen Schaltventil 31. Dabei wird mittels der Rückförderpumpe 16 über den Bremszylinder 1 aus dem Vorratsbehälter 4 oder dem Niederdruckspeicher 20 Druckmittel in die Radbremskreise 26, 27 gefördert, in denen so entsprechend der berechneten Bremsdruckanforderung Druckmittel eingesteuert wird. Das Druckmittel wird über den Einmündungspunkt E von der Bremsdruckleitung 8 des z.B.führenden Radbremskreises 26 und in die Bremsdruckleitung 9 des folgenden Radbremskreises 27 über die Einlaßventile 12 und 19 zu den Radbremsen 10 und 11 geführt. Wenn der berechnete Wert der Bremsdruckanforderung im folgenden Radbremskreis 27 eingestellt ist, wird das Einlaßventil 19 mittels Schaltimpuls geschlossen. Das Druckmittel wird von dem graduell angesteuerten Motor der Rückförderpumpe im führenden Radbremskreis 26 bis zum Erreichen der Bremsdruckanforderung eingesteuert, danach bleibt das Einlaßventil 12 geöffnet, das Schaltventil 31 wird geschlossen. Trennventil 6 bleibt geschlossen. Es stellt sich ein konstanter Druck C ein.

Das Halten des Bremsdruckes in den Radbremskreisen 26, 27 erfolgt bevorzugt bei geöffnetem Einlaßventil 12. Die Rückförderpumpe 16 wird dabei in einem Grundlastzustand betrieben, d.h. mit geringster Förderleistung und/Energiezufuhr und/Drehzahl, so daß der Pumpenkolben von dem Exzenter gerade noch bewegt wird. Dieser Betrieb der Rückförderpumpe 16 im Grundlastzustand wird bevorzugt über die pulsweitenmodulierte Ansteuerung des Pumpenmotors gesteuert, wenn kein Druckmittelvolumen im Niederdruckspeicher 20 gespeichert ist. In einem nicht erwünschten Sonderfall wird eine Drucküberhöhung durch ein Nachfördern der Rückförderpumpe aus dem Niederdruckspeicher 20 oder-dämpfer 18 während des Haltens des Bremsdrucks im führenden Radbremskreis 26 wirksam verhindert, indem das Einlaßventil 12 geschlossen wird. Das Schließen des Einlaßventils 12 wird durch einen zeitabhängigen Schaltimpuls nach dem Schließen des Schaltventils 31 in Fahrsituationen, wie zum Beispiel bei einer Antriebsschlupfregelung auf homogenem Reibwert, in denen ein Überschwingen des Drucks über den Wert der Bremsdruckanforderung erhebliche negative Auswirkungen auf das Radverhalten ausübt, vorgenommen. Alternativ kann auch der Bremsdruck sensiert oder berechnet und das Einlaßventil 12 in Abhängigkeit von dem Bremsdruck geschlossen werden. Der Inhalt des Niederdruckspeichers 20 und/oder -dämpfers 18 wird über das Überdruckventil 25 in den Bremszylinder 1 und den Vorratsbehälter 4 zurückgefördert.

Der Druckabbau F des führenden Radbremskreises 26 erfolgt durch Öffnung des Trennventiles 6, so daß Druckmittel über das offene Einlaßventil 12, das Trennventil6 und den Bremszylinder 1 in den Vorratsbehälter 4 strömt. Das Trennventil 6 wird von dem Druckregler 28 mittels Schaltimpulsen D nach jedem Druckabbau geschlossen. Im folgenden Radbremskreis 27 wird bei geöffnetem Auslaßventil 17 und geschlossenen Einlaßventil 19 Drückmittel aus der Radbremse 11 in den Niederdruckspeicher 20 zurückgefördert. Der Niederdruckspeicher 20 übernimmt dabei eine Pufferfunktion.

Eine Korrektur der Bremsdruckanforderung des folgenden Radbremskreises 27 hin zu einer Bremsdruckerhöhung wird über die Öffnung des Einlaßventils 19 aus dem führenden Radbremskreis vorgenommen, dessen Bremsdruckanforderung in Abhängigkeit von vorgegebenen Regelschwellen ebenfalls korrigiert oder bei dem der verminderte Bremsdruck toleriert wird.

## Patentansprüche

1. Verfahren zur Druckmodulation von Bremsdrücken mit einer elektrisch betätigbaren Druckmittelpumpe (16) in einer zweikreisigen Bremsdruckübertragungseinrichtung, mit den Schritten Einsteuern eines Bremsdruckes in den einen und/oder anderen Radbremskreis (26, 27) des einen Bremsdruckübertragungkreises, Halten des Bremsdruckes in dem einen und/oder anderen Radbremskreis (26, 27) des einen Bremsdruckübertragungskreises und Abbauen des Bremsdruckes in den einen und/oder anderen Radbremskreis (26, 27) des einen Bremsdruckübertragungskreises
**gekennzeichnet durch**
eine Aufteilung der Radbremskreise (26, 27) des einen Bremsdruckübertragungskreises in einen führenden und
einen folgenden Radbremskreis mit unterschiedlicher Bremsdruckanforderung,
eine Festlegung des führenden Radbremskreises (26 oder 27)als Radbremskreis mit einer höheren Bremsdruckanforderung, und
ein Einsteuern, Halten oder Abbauen des Bremsdruckes des folgenden Radbremskreises in Abhängigkeit von dem führenden Radbremskreis derart, daß beim Einsteuern des Bremsdruckes in die beiden Radbremskreise (26, 27) die Bremsdruckanforderung im folgenden Radbremskreis vor der Bremsdruckanforderung im führenden Radbremskreis eingestellt wird.

2. Verfahren nach Anspruch 1 **dadurch gekennzeichnet, daß** ein als führend festgelegter Radbremskreis (26 oder 27) des einen Bremsdruckübertragungskreises über das öffnen eines Schaltventils (31) mit einer Druckmittelquelle (4) verbunden wird und das Druckmittel über die im Radbremskreis angeordnete Druckmittelpumpe (16) in den führenden und folgenden Radbremskreis eingesteuert wird, wobei der Bremsdruckkreis (8, 9) von der Druckmittelquelle mit einem Trennventil (6) getrennt wird.

3. Verfahren nach Anspruch 1 oder 2 **dadurch gekennzeichnet, daß** der führende Radbremskreis (26 oder 27) des einen Bremsdruckübertragungkreises bei geschlossenem Schaltventil (31) mit einem Druckmittelspeicher (20) verbunden wird und das Druckmittel über die im Radbremskreis angeordnete Druckmittelpumpe (16) in den führenden und folgenden Radbremskreis bei von einer Druckmittelquelle (4) mit einem Trennventil (6) getrennten Bremsdruckkreis (8, 9) eigesteuert wird.

4. Verfahren nach einem der Ansprüche 1 bis 3 **dadurch gekennzeichnet, daß** in jedem Radbremskreis ein Ein- und Auslaßventil (12, 19, 14, 17) vorgesehen ist und die Bremsdruckanforderung des führenden und folgenden Radbremskreises über das Einlaßventil (19) des folgenden Radbremskreises und das von der Druckmittelpumpe (16) nach Maßgabe der Bremsdruckanforderung geförderten Druckmittels bei geöffnetem Einlaßventil (12) des führenden Radbremskreises und geschlossenen Auslaßventilen (14, 17) des führenden und folgenden Radbremskreises gesteuert wird.

5. Verfahren nach einem der Ansprüche 1 bis 4 **dadurch gekennzeichnet, daß** die Bremsdruckanforderung des folgenden Radbremskreises aus dem führenden Radbremskreis bei geöffnetem Einlaßventil (12 oder 19) des folgenden Radbremskreises und aktiver oder passiver Druckmittelpumpe (16) eingesteilt wird.

6. Verfahren nach einem der Ansprüche 1 bis 5 **dadurch gekennzeichnet, daß** der Bremsdruck der Radbremskreise (26, 27) bei geschlossenem Schaltventil (31), Trennventil (6) und Auslaßventil (14 oder 17) und geöffnetem Einlaßventil (12 oder 19) des führenden Radbremskreises und geschlossenem Aus- und Einlaßventil des folgenden Radbremskreises gehalten wird.

7. Verfahren nach einem der Ansprüche 1 bis 6 **dadurch gekennzeichnet, daß** bei gegenüber der Bremsdruckanforderung erhöhtem eingesteuerten Bremsdruck das Einlaßventil (12 oder 19) des führenden Radbremskreises in Abhängigkeit von dem Bremsdruck im Radbremskreis oder in Abhängigkeit von einer mit einer Zustandsgröße korrelierenden Zeitkonstanten geschlossen wird.

8. Verfahren nach einem der Ansprüche 1 bis 7 **dadurch gekennzeichnet, daß** bei geschlossenem Schalt-(31) und Auslaßventil (14) und geöffnetem Einlaßventil (12) durch Öffnen des Trennventils (6) der Bremsdruck im führenden Radbremskreis über den Bremsdruckkreis in die Druckmittelquelle (4) abgebaut wird.

9. Verfahren nach einem der Ansprüche 1 bis 8 **dadurch gekennzeichnet, daß** der Bremsdruck im folgenden Radbremskreis bei geschlossenem Einlaßventil (19) durch öffnen des Auslaßventils (17) über eine Rücklaufleitung (33, 15) in den Druckmittelspeicher (20) abgebaut wird wobei im führenden Radbremskreis das Schalt-(31) und/oder Trennventil (6) in Abhängigkeit des Schrittes Einsteuern oder Halten oder Abbauen der Bremsdrücke geschlossen oder geöffnet ist.

10. Verfahren nach einem der Ansprüche 1 bis 9 **dadurch gekennzeichnet, daß** die Kenngrößen für die Schritte Einsteuern, Halten und Abbauen des Bremsdruckes anhand eines Druckreglers (28) vorgegeben werden.

11. Verfahren nach einem der Ansprüche 1 bis 10 **dadurch gekennzeichnet, daß** die Druckmittelpumpe (16) während des Einsteuerns des Bremsdruckes in den führenden und folgenden Radbremskreis mit von eine Druckregler (28) vorgegebenen graduellen Größen, vorzugsweise einem pulsweitenmoduliertem Signal, gesteuert wird.

12. Verfahren nach einem der Ansprüche 1 bis 11 **dadurch gekennzeichnet, daß** die Druckmittelpumpe (16) während der Schritte Halten und Abbauen der Bremsdrücke über die Einstellung der Energiezufuhr und/oder der Drehzahl und/oder der Förderleistung in einem vorgegebenen Grund zustand, vorzugsweise mit geringster Energiezufuhr, Drehzahl und/oder Förderleistung, betrieben wird.

## Claims

1. Method for the pressure modulation of brake pressures with an electrically operable pressure fluid pump (16) in a dual-circuit brake pressure transmission device, with the steps introduction of a brake pressure into the one and/or the other wheel brake circuit (26, 27) of the one brake pressure transmission circuit, maintaining the brake pressure in the one and/or the other wheel brake circuit (26, 27) of the one brake pressure transmission circuit, and discharge of the brake pressure into the one and/or the other wheel brake circuit (26, 27) of the one brake pressure transmission circuit,
**characterized by**
a split-up of the wheel brake circuits (26, 27) of the one brake pressure transmission circuit into a leading and a following wheel brake circuit with different brake pressure demands,
a definition of the leading wheel brake circuit (26 or 27) as wheel brake circuit with a higher brake pressure demand, and
an introduction, maintaining, or reduction of the brake pressure of the following wheel brake circuit in dependence on the leading wheel brake circuit in such a way that upon introduction of the brake pressure into the two wheel brake circuits (26, 27), the brake pressure demand in the following wheel brake circuit is adjusted before the brake pressure demand in the leading wheel brake circuit.

2. Method as claimed in claim 1,
**characterized in that** a wheel brake circuit (26 or 27) of the one brake pressure transmission circuit which is defined as leading is connected to a pressure fluid source (4) by way of opening of a switch valve (31), and the pressure fluid is introduced into the leading and following wheel brake circuits by way of the pressure fluid pump (16) arranged in the wheel brake circuit, with the brake pressure circuit (8, 9) being separated from the pressure fluid source by a separating valve (6).

3. Method as claimed in claim 1 or 2,
**characterized in that** the leading wheel brake circuit (26 or 27) of the one brake pressure transmission circuit is connected to a pressure fluid accumulator (20), with switch valve (31) closed, and the pressure fluid is introduced into the leading and following wheel brake circuits by way of the pressure fluid pump (16) arranged in the wheel brake circuit, with brake pressure circuit (8, 9) being separated from a pressure fluid source (4) by a separating valve (6).

4. Method as claimed in any one of the claims 1 to 3,
**characterized in that** one inlet valve and one outlet valve (12, 19, 14, 17) is provided in each wheel brake circuit, and the brake pressure demand of the leading and following wheel brake circuits is controlled by way of the inlet valve (19) of the following wheel brake circuit and the pressure fluid supplied by the pressure fluid pump (16) according to the brake pressure demand, with the inlet valve (12) of the leading wheel brake circuit being open and the outlet valves (14, 17) of the leading and following wheel brake circuit being closed.

5. Method as claimed in any one of claims 1 to 4,
**characterized in that** the brake pressure demand of the following wheel brake circuit out of the leading wheel brake circuit is adjusted, with the inlet valve (12 or 19) of the following wheel brake circuit open and with an active or passive pressure fluid pump (16).

6. Method as claimed in any one of claims 1 to 5,
**characterized in that** the brake pressure of the wheel brake circuits (26, 27) is maintained, with the switch valve (31), separating valve (6) and outlet valve (14 or 17) closed and the inlet valve (12 or 19) of the leading wheel brake circuit open, and the outlet and inlet valve of the following wheel brake circuit closed.

7. Method as claimed in any one of claims 1 to 6,
**characterized in that** when the brake pressure introduced is increased compared to the brake pressure demand, the inlet valve (12 or 19) of the leading wheel brake circuit is closed in dependence on the brake pressure in the wheel brake circuit or in dependence on a time constant correlated to a condition variable.

8. Method as claimed in any one of claims 1 to 7,
**characterized in that** the brake pressure in the leading wheel brake circuit is discharged into the pressure fluid source (4) by way of the brake pressure circuit by opening the separating valve (6), with the switch valve (31) and outlet valve (14) closed and the inlet valve (12) open.

9. Method as claimed in any one of claims 1 to 8,
**characterized in that** the brake pressure in the following wheel brake circuit is discharged through a return line (33, 15) into the pressure fluid accumulator (20) by opening the outlet valve (17) when the inlet valve (19) is closed, with the switch valve (31) and/or separating valve (6) in the leading wheel brake circuit being closed or open in dependence on the steps introduction, or maintaining, or reduction of the brake pressures.

10. Method as claimed in any one of claims 1 to 9,
**characterized in that** the parameters for the steps introduction, maintaining, and reduction of the brake pressure are predetermined by a pressure controller (28).

11. Method as claimed in any one of claims 1 to 10,
**characterized in that** the pressure fluid pump (16) is controlled by way of gradual quantities, preferably a pulse-width modulated signal, predetermined by a pressure controller (28) during the introduction of the brake pressure into the leading and following wheel brake circuits.

12. Method as claimed in any one of claims 1 to 11,
**characterized in that** the pressure fluid pump (16) is operated during the steps maintaining and reduction of the brake pressures by way of adjusting the energy supply, and/or the rotational speed, and/or the conveying capacity in a predetermined basic condition, preferably with lowest energy supply, rotational speed, and/or conveying capacity.

## Revendications

1. Procédé de modulation de pressions de freinage au moyen d'une pompe à fluide sous pression (16) à actionnement électrique dans un dispositif de transmission de la pression de freinage à deux circuits, comportant les étapes suivantes : introduction d'une pression de freinage dans l'un et/ou l'autre des circuits des freins des roues (26, 27) d'un circuit de transmission de la pression de freinage, maintien de la pression de freinage dans l'un et/ou l'autre des circuits des freins des roues (26, 27) du circuit de transmission de la pression de freinage, et réduction de la pression de freinage dans l'un et/ou l'autre circuit des freins des roues (26, 27) du circuit de transmission de la pression de freinage,
**caractérisé par**
une division des circuits des freins des roues (26, 27) du circuit de transmission de la pression de freinage en un circuit menant et un circuit suiveur des freins des roues avec demande différente de la pression de freinage,
une définition du circuit menant des freins des roues (26 ou 27) en tant que circuit des freins des roues avec une plus grande demande de pression de freinage, et
une introduction, un maintien ou une réduction de la pression de freinage du circuit suiveur des freins des roues en fonction du circuit menant des freins des roues de manière que lorsque la pression de freinage est introduite dans les deux circuits des freins des roues (26, 27), la demande de pression de freinage dans le circuit suiveur des freins des roues soit réglée avant la demande de pression de freinage dans le circuit menant des freins des roues.

2. Procédé selon la revendication 1, **caractérisé en ce qu'**un circuit des freins des roues (26 ou 27), défini comme menant, du circuit de transmission de la pression de freinage est relié, par l'ouverture d'une soupape de commande (31), à une source de fluide sous pression (4) et le fluide sous pression est introduit, par la pompe de fluide sous pression (16) disposée dans le circuit des freins des roues, dans le circuit menant et le circuit suiveur des freins des roues, le circuit de la pression de freinage (8, 9) étant séparé de la source de fluide sous pression au moyen d'une soupape de séparation (6).

3. Procédé selon la revendication 1 ou 2, **caractérisé en ce que** le circuit menant des freins des roues (26 ou 27) du circuit de transmission de la pression de freinage est relié à un accumulateur de fluide sous pression (20), lorsque la soupape de commande (31) est fermée et le fluide sous pression est introduit, par la pompe de fluide sous pression (16) disposée dans le circuit des freins des roues, dans le circuit menant et le circuit suiveur des freins des roues, lorsque le circuit de la pression de freinage (8, 9) est séparé d'une source de fluide sous pression (4) au moyen d'une soupape de séparation (6).

4. Procédé selon l'une des revendications 1 à 3, **caractérisé en ce que** dans chaque circuit des freins des roues sont prévues une soupape d'admission et une soupape d'échappement (12, 19, 14, 17), et la demande de pression de freinage du circuit menant et du circuit suiveur du frein des roues est commandée, à travers la soupape d'admission (19) du circuit suiveur des freins des roues, et le fluide sous pression est mis en circulation par la pompe de fluide sous pression (16) suivant la demande de pression de freinage, alors que la soupape d'admission (12) du circuit menant des freins des roues est ouverte et les soupapes d'échappement (14, 17) du circuit menant et du circuit suiveur des freins des roues sont fermées.

5. Procédé selon l'une des revendications 1 à 4, **caractérisé en ce que** la demande de pression de freinage du circuit suiveur des freins des roues est réglée à partir du circuit menant des freins des roues alors que la soupape d'admission (12 ou 19) du circuit suiveur des freins des roues est ouverte, et la pompe de fluide sous pression (16) est active ou passive.

6. Procédé selon l'une des revendications 1 à 5, **caractérisé en ce que** la pression de freinage des circuits des freins des roues (26, 27) est maintenue alors que la soupape de commande (31), la soupape de séparation (6) et la soupape d'échappement (14 ou 17) sont fermées, et la soupape d'admission (12 ou 19) du circuit menant des freins des roues est ouverte, et la soupape d'échappement et la soupape d'admission du circuit suiveur des freins des roues sont fermées.

7. Procédé selon l'une des revendications 1 à 6, **caractérisé en ce que**, dans le cas où la pression de freinage introduite est supérieure à la demande de pression de freinage, la soupape d'admission (12 ou 19) du circuit menant des freins des roues est fermée en fonction de la pression de freinage dans le circuit des freins des roues ou en fonction d'une constante de temps corrélée à une grandeur d'état.

8. Procédé selon l'une des revendications 1 à 7, **caractérisé en ce que**, dans le cas où la soupape de commande (31) et la soupape d'échappement (14) sont fermées et la soupape d'admission (12) est ouverte, la pression de freinage dans le circuit menant des freins des roues est réduite, à travers le circuit de pression de freinage, dans la source de fluide sous pression (4), par ouverture de la soupape de séparation (6).

9. Procédé selon l'une des revendications 1 à 8, **caractérisé en ce que** la pression de freinage est réduite dans le circuit suiveur des freins des roues, lorsque la soupape d'admission (19) est fermée, par ouverture de la soupape d'échappement (17), à travers une conduite de retour (33, 15) dans l'accumulateur de fluide sous pression (20), la soupape de commande (31) et/ou soupape de séparation (6) étant fermée ou ouverte, dans le circuit menant des freins des roues, en fonction de l'étape : introduction ou maintien ou réduction des pressions de freinage.

10. Procédé selon l'une des revendications 1 à 9, **caractérisé en ce que** les grandeurs caractéristiques des étapes introduction, maintien et réduction de la pression de freinage, sont prédéfinies à l'aide d'un régulateur de pression (28).

11. Procédé selon l'une des revendications 1 à 10, **caractérisé en ce que** la pompe de fluide sous pression (16) est commandée, pendant l'introduction de la pression de freinage dans le circuit menant et le circuit suiveur des freins des roues, avec des grandeurs graduelles prédéfinies par un régulateur de pression (28), de préférence avec un signal modulé en largeur d'impulsion.

12. Procédé selon l'une des revendications 1 à 11, **caractérisé en ce que** la pompe de fluide sous pression (16) fonctionne pendant les étapes : maintien et réduction de pression de freinage, à travers le réglage de l'apport d'énergie et/ou de la vitesse de rotation et/ou du débit, dans un état de base prédéfini, de préférence avec apport d'énergie, vitesse de rotation et/ou débit minimal.
